# FASCICULE DE BREVET EUROPEEN

(11) **EP 3 648 988 B1**
(45) Date de publication et mention de la délivrance du brevet: **21.04.2021**
(21) Numéro de dépôt: 18733638.3
(22) Date de dépôt: 02.07.2018
(51) Int. Cl.: B60C 1/00, C08F 136/08, C08C 19/22, C08F 236/10, C08L 15/00

(54) **COMPOSITION À BASE D'AU MOINS UN COMPOSÉ POLYAROMATIQUE PARTICULIER**
ZUSAMMENSETZUNG AUF BASIS MINDESTENS EINER SPEZIFISCHEN POLYAROMATISCHEN VERBINDUNG
COMPOSITION ON THE BASIS OF AT LEAST ONE SPECIFIC POLYAROMATIC COMPOUND

(30) Priorité: 04.07.2017 FR 1756302
(43) Date de publication de la demande: 13.05.2020
(73) Titulaire: Compagnie Générale des Etablissements Michelin, 63000 Clermont-Ferrand (FR)
(72) Inventeur: SALIT, Anne-Frédérique, 63040 Clermont-Ferrand Cedex 09 (FR); GANDER, Sophie, 63040 Clermont-Ferrand Cedex 09 (FR)
(74) Mandataire: Gandon-Pain, Sylvie
(86) Numéro de dépôt international: PCT/EP2018/067768
(87) Numéro de publication internationale: WO 2019/007883

(56) Documents cités:
- WO-A1-2012/007441
- WO-A1-2012/007684

## Description

La présente invention concerne une composition de caoutchouc, utilisable notamment pour la fabrication de pneumatiques, à base d'au moins un élastomère diénique, au moins une charge renforçante, au moins un agent de réticulation chimique, et au moins un composé polyaromatique particulier.

La demande concerne également un procédé de préparation d'une telle composition et aussi un pneumatique comprenant une telle composition.

Dans le domaine industriel, des mélanges de polymères avec des charges sont souvent utilisés. Pour que de tels mélanges présentent de bonnes propriétés, on recherche en permanence des moyens pour améliorer la dispersion des charges au sein des polymères. L'un des moyens pour parvenir à ce résultat est l'utilisation d'agents de couplage capables d'établir des interactions entre le polymère et la charge.

Des agents de couplage d'un polymère avec une charge comprenant des dipôles azotés sont décrits dans les documents publiés sous les numéros US7186845B2 et JP2008208163.

Ces documents décrivent la modification de polymères comprenant des motifs diéniques par des composés dipolaires azotés comprenant en outre un hétérocycle, ledit hétérocycle comprenant lui-même un atome d'azote, et un atome d'oxygène et/ou de soufre.

Plus particulièrement, les composés décrits sont des nitrones porteuses de fonction oxazoline, thiazoline comme par exemple la ((2-oxazolyl)-phényl-N-méthylnitrone) :

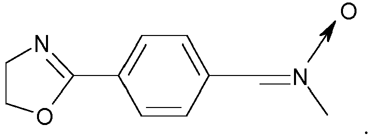

Lorsque des polymères diéniques sont amenés à réagir avec de tels composés, les polymères en résultant porteront les cycles oxazoline ou thiazoline.

Ces cycles présents sur le polymère sont susceptibles de réagir à leur tour, avec des fonctions de surface des charges, comme le noir de carbone ou la silice, avec lesquels les polymères sont mélangés. Cette réaction conduit à l'établissement de liaisons covalentes entre le polymère modifié par l'agent de couplage et la charge du fait de l'ouverture du cycle oxazoline ou thiazoline. En effet, comme cela est décrit dans le document US7186845B2, les cycles oxazoline et/ou thioazoline sont susceptibles de s'ouvrir en présence d'un nucléophile pouvant par exemple être présent à la surface de la charge.

L'établissement de telles liaisons covalentes présente néanmoins des inconvénients lors de la préparation de mélanges comprenant ces polymères modifiés par des agents de couplage avec des charges. En particulier, l'existence de ces liaisons covalentes précocement établies, entre le polymère et les charges, rend ces mélanges très visqueux à l'état non réticulé, ce qui rend difficile toutes les opérations préalables à la réticulation (vulcanisation) des formulations à base de caoutchouc, notamment la préparation des mélanges des composants, et leur mise en forme. Ces inconvénients ont un fort impact sur la productivité industrielle.

Il est donc souhaitable de proposer de nouvelles molécules ne présentant pas les inconvénients ci-dessus, c'est-à-dire des molécules qui soient capables après réaction avec un polymère et mélange avec une charge, de ne pas former de liaisons covalentes avec la charge et donc de ne pas provoquer une trop forte augmentation de la viscosité du mélange.

Ainsi, la demande de brevet WO 2012/007684 porte sur un composé comprenant au moins un groupement Q, et au moins un groupement A reliés entre eux par au moins et de préférence un groupe espaceur Sp dans lequel :
- Q comprend un dipôle contenant au moins et de préférence un atome d'azote ;
- A comprend un groupe associatif comprenant au moins un atome d'azote ;
- Sp est un atome ou un groupe d'atomes formant une liaison entre Q et A.

Lorsqu'un polymère greffé par un composé tel que défini ci-dessus est mélangé à des charges, celui-ci n'établit que des liaisons labiles avec les charges, ce qui permet d'assurer une bonne interaction polymère - charge, bénéfique pour les propriétés finales du polymère, mais sans les inconvénients qu'une trop forte interaction polymère - charge pourrait provoquer.

Un exemple d'un tel composé est l'oxyde de 2-[2-(2-oxoimidazolidin-1-yl)éthoxy]benzonitrile :

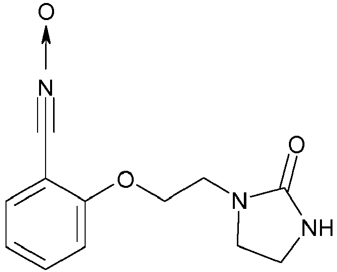

Par ailleurs, dans la demande WO 2016/207263, divers composés sont exemplifiés, dont notamment l'oxyde de 2,4,6-triméthl-3-2-2-oxoimidazolidin-1-léthoxbenzonitrile :

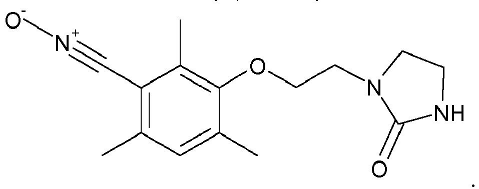

Il s'avère que les compositions de caoutchouc, utilisables notamment pour la fabrication de pneumatiques, comprenant cette molécule présentent des propriétés intéressantes en termes de rigidité, de contrainte à la rupture ou encore d'hystérèse. Néanmoins, il existe toujours un besoin constant de disposer de compositions de caoutchouc présentant des propriétés améliorées.

Dans ce contexte, la demanderesse a découvert que la modification d'élastomères diéniques par greffage d'un composé polyaromatique particulier, une fois intégrés dans des compositions de caoutchouc, utilisables notamment pour la fabrication de pneumatiques, conduisait à l'obtention d'excellentes propriétés de rigidité, de contrainte à la rupture et d'hystérèse.

L'invention a donc pour objet une composition de caoutchouc à base d'au moins un élastomère diénique, au moins une charge renforçante, au moins un agent de réticulation chimique, et au moins un composé, éventuellement déjà greffé sur l'élastomère, de formule (I) suivante : 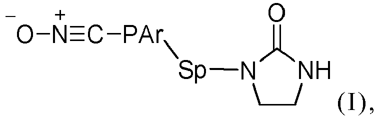 dans laquelle :
- PAr désigne un groupe polyaromatique comprenant au moins deux cycles hydrocarbures aromatiques condensés, chacun desdits cycles aromatiques condensés étant éventuellement substitué par une ou plusieurs chaînes carbonées, identiques ou différentes, indépendantes les unes des autres, aliphatiques ou aromatiques, linéaires, ramifiées ou cycliques, éventuellement substituées ou interrompues par un ou plusieurs hétéroatomes ;
- Sp représente un atome ou un groupe d'atomes.

Un autre objet de l'invention est un procédé de préparation de la composition de caoutchouc selon l'invention.

L'invention a également pour objet un pneumatique comprenant une composition de caoutchouc selon l'invention, ainsi qu'un pneumatique poids lourd comportant une bande de roulement constituée d'une composition de caoutchouc selon l'invention.

On entend au sens de la présente invention par « chaîne carbonée » une chaîne comprenant un ou plusieurs atomes de carbone.

On entend au sens de la présente invention par "composition à base de" une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la suite du texte, on entend par "taux de composé de formule (I)" présent dans une composition de caoutchouc, exprimé en pourcentage molaire, le nombre de composés de formule (I) présents dans la composition pour cent motifs d'élastomère diénique de la composition, qu'il s'agisse indifféremment de motifs diéniques ou non diéniques.

Par exemple, si le taux de composé de formule (I) sur un SBR (caoutchouc styrène butadiène) est de 0,20% molaire, cela signifie qu'il y aura 0,20 motif issu de composé de formule (I) pour 100 motifs styréniques et butadiéniques de SBR.

Dans le cas où on utilise dans la composition à la fois un élastomère déjà greffé par le composé de formule (I) et un élastomère diénique non greffé par le composé de formule (I), le taux de composé de formule (I) représente le nombre de composés de formule (I) greffés pour 100 motifs d'élastomères diéniques, le nombre de motifs prenant en compte les deux élastomères (greffé et non greffé), en supposant que d'autres composés de formule (I) non déjà greffés n'ont pas été ajoutés dans la composition.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention ainsi que ses avantages seront aisément compris à la lumière de la description et des exemples de réalisations qui suivent.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

Conformément à la formule (I), le composé selon l'invention comprend un groupe PAr désignant un groupe polyaromatique comprenant au moins deux cycles hydrocarbures aromatiques condensés.

On entend au sens de la présente invention par « cycle hydrocarbure aromatique » un cycle aromatique dont le squelette est constitué d'atomes de carbone. Autrement dit, il n'y a pas d'hétéroatome dans le squelette du cycle.

On entend au sens de la présente invention par « au moins deux cycles hydrocarbures aromatiques condensés » deux ou plusieurs cycles hydrocarbures aromatiques ayant en commun au moins deux atomes de carbone successifs.

Lesdits au moins deux cycles hydrocarbures aromatiques condensés peuvent être ortho-condensés ou ortho- et péri-condensés.

Avantageusement, le groupe polyaromatique comprenant au moins deux cycles hydrocarbures aromatiques condensés est choisi parmi un groupe formé de deux cycles aromatiques condensés selon un arrangement rectiligne et un groupe formé de trois cycles aromatiques condensés selon un arrangement rectiligne, de préférence un groupe formé de deux cycles aromatiques condensés selon un arrangement rectiligne. Ces structures s'apparentent aux composés du naphtalène et de l'anthracène.

Conformément à la formule (I), le groupe polyaromatique comprenant au moins deux cycles hydrocarbures aromatiques condensés est au moins substitué par la fonction oxyde de nitrile et le groupe Sp. Autrement dit, le premier cycle desdits au moins deux cycles hydrocarbures aromatiques est au moins substitué par la fonction oxyde de nitrile, ledit premier cycle ou le deuxième cycle desdits au moins deux cycles hydrocarbures aromatiques étant au moins substitué par le groupe Sp, ledit groupe Sp permettant de relier la fonction imidazolidinone à l'un au moins desdits au moins deux cycles hydrocarbures aromatiques.

Avantageusement, chacun des cycles hydrocarbures aromatiques condensés est éventuellement substitué par une ou plusieurs chaînes carbonées, identiques ou différentes, aliphatiques ou aromatiques, linéaires, ramifiées ou cycliques, éventuellement substituées ou interrompues par un ou plusieurs hétéroatomes, et inertes vis-à-vis de l'une ou l'autre des fonctions que sont la fonction imidazolidinone et la fonction oxyde de nitrile.

On entend au sens de la présente invention par « chaîne carbonée inerte vis-à-vis de l'une ou l'autre des fonctions que sont la fonction imidazolidinone et la fonction oxyde de nitrile » une chaîne carbonée qui ne réagit pas avec l'une ou l'autre de ces fonctions. Ainsi, ladite chaîne carbonée inerte vis-à-vis de l'une ou l'autre de ces fonctions est par exemple une chaîne carbonée qui ne présente pas de fonctions alcényle ou alcynyle, susceptibles de réagir avec la fonction oxyde de nitrile.

De manière préférée, lesdites chaînes carbonées sont saturées.

De préférence, chacun des cycles hydrocarbures aromatiques condensés est éventuellement substitué par une ou plusieurs chaînes carbonées, identiques ou différentes, saturées, plus préférentiellement un ou plusieurs groupes alkyles, identiques ou différents, préférentiellement un ou plusieurs groupes alkyles, identiques ou différents, en C₁-C₁₂, plus préférentiellement en C₁-C₆, encore plus préférentiellement en C₁-C₄, ou un groupe choisi parmi -OR', -NHR', - SR', R' étant un groupe alkyle, préférentiellement un groupe alkyle en C₁-C₁₂, plus préférentiellement en C₁-C₆, encore plus préférentiellement en C₁-C₄.

Encore plus préférentiellement, chacun des cycles aromatiques condensés est éventuellement substitué par un ou plusieurs groupes, identiques ou différents, méthyle, éthyle ou un ou plusieurs groupes OCH₃.

Selon un mode de réalisation préféré, le taux de greffage du polymère selon l'invention varie de 0,01 à 5% molaire, de préférence de 0,01 à 1% molaire, de préférence encore de 0,1 à 1% molaire.

Comme expliqué précédemment, la composition de caoutchouc selon l'invention est à base d'au moins un élastomère diénique.

Ces élastomères diéniques peuvent être classés de manière connue en deux catégories, ceux dits essentiellement insaturés et ceux dits essentiellement saturés. Ces deux catégories d'élastomères diéniques sont envisageables dans le cadre de l'invention.

Un élastomère diénique essentiellement saturé a un taux de motifs ou unités d'origine diénique faible ou très faible (diènes conjugués) qui est toujours inférieur à 15% (% en moles).

De préférence, l'élastomère diénique essentiellement saturé est choisi parmi les copolymères d'éthylène-propylène-monomère diène (de type EPDM) et les caoutchoucs butyle.

A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On entend plus particulièrement par élastomère diénique susceptible d'être utilisé dans l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène; de tels polymères sont décrits en particulier dans les documents WO 2004/035639A1 et US 2005/0239639A1 ;
(d) un copolymère d'isobutène et d'isoprène (caoutchouc butyle), ainsi que les versions halogénées, en particulier chlorées ou bromées, de ce type de copolymère ;
(e) tout copolymère obtenu par copolymérisation d'un ou plusieurs diènes conjugués avec l'éthylène, une α-monooléfine aliphatique acyclique ayant de 3 à 18 atomes de carbone, une α-monooléfine aromatique ou leur mélange comme par exemple ceux décrits dans les documents WO 2005028526, WO 2004035639 et WO 2007054224.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. A titre d'a-monooléfines aliphatiques acycliques ayant de 3 à 18 atomes de carbone, on peut citer le propène, le butène, l'hexène, l'octène, l'hexadécène. A titre d'a-monooléfine aromatique, typiquement de formule CH₂=CH-Ar dans laquelle le symbole Ar représente un groupe aromatique tel qu'un phényle, substitué ou non conviennent le styrène, les styrènes substitués par un ou plusieurs groupes alkyles en para, méta ou ortho ou leurs mélanges.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant randomisant employées. Les élastomères peuvent être par exemple à blocs, statistiques, séquencés, microséquencés, et être préparés en dispersion, en émulsion ou en solution ; ils peuvent être couplés et/ou étoilés ou encore fonctionnalisés avec un agent de couplage et/ou d'étoilage ou de fonctionnalisation.

Bien qu'elle s'applique à tout type d'élastomère diénique, on préfère utiliser au moins un élastomère diénique du type (a) ou (b) ou (e) ci-dessus.

Conviennent en particulier les élastomères diéniques choisis dans le groupe constitué par les polybutadiènes (BR), les polyisoprènes de synthèse (IR), le caoutchouc naturel (NR), les copolymères de butadiène, les copolymères d'isoprène et les mélanges de ces élastomères, de préférence dans le groupe constitué par les polybutadiènes (BR), les polyisoprènes de synthèse (IR), les copolymères de butadiène, les copolymères d'isoprène et les mélanges de ces élastomères.

De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Comme cela est mentionné précédemment, la composition de caoutchouc selon l'invention est à base d'au moins un élastomère diénique et au moins un composé, éventuellement déjà greffé sur l'élastomère, de formule (I) telle que définie précédemment.

En effet, l'élastomère diénique peut être greffé par le composé de formule (I) préalablement à son introduction dans la composition de caoutchouc, ou bien peut être greffé par réaction avec le composé de formule (I) lors de la fabrication de la composition.

La composition selon l'invention peut donc contenir un seul élastomère diénique greffé par le composé de formule (I) (soit greffé préalablement à son introduction dans la composition, soit greffé par réaction avec le composé de formule (I) pendant la fabrication de la composition), ou un mélange de plusieurs élastomères diéniques tous greffés, ou dont certains sont greffés et les autres pas.

Le ou les autres élastomères diéniques utilisés en coupage avec l'élastomère greffé selon l'invention sont des élastomères diéniques conventionnels tels que décrits plus haut qu'ils soient étoilés, couplés, fonctionnalisés ou non.

Le ou les élastomères diéniques greffés selon l'invention peuvent être utilisés en association avec tout type d'élastomère synthétique autre que diénique, voire avec des polymères autres que des élastomères.

Conformément à la présente invention, le composé de formule (I) comprend un groupe Sp.

Le groupe Sp est de préférence une chaîne hydrocarbonée en C₁-C₂₄, linéaire, ramifiée, ou cyclique, pouvant contenir un ou plusieurs radicaux aromatiques, et/ou un ou plusieurs hétéroatomes. Ladite chaîne peut éventuellement être substituée, pour autant que les substituants ne réagissent pas avec l'une ou l'autre des fonctions que sont la fonction imidazolidinone et la fonction oxyde de nitrile.

On entend au sens de la présente invention par « chaîne hydrocarbonée » une chaîne comprenant un ou plusieurs atomes de carbone et un ou plusieurs atomes d'hydrogène.

On entend au sens de la présente invention par « chaîne hydrocarbonée pouvant contenir un ou plusieurs hétéroatomes » le fait que la chaîne peut être substituée ou interrompue par un ou plusieurs hétéroatomes. Lorsque la chaîne est interrompue par un hétéroatome, celui-ci peut être en bout de chaîne ou en milieu de chaîne.

Avantageusement, le groupe Sp est une chaîne alkylène linéaire ou ramifiée en C₁-C₂₄, préférentiellement en C₁-C₁₀, plus préférentiellement en C₁-C₆, éventuellement interrompue par un ou plusieurs atomes d'azote, de soufre ou d'oxygène.

De préférence, le groupe Sp contient un motif choisi parmi - (CH₂)_{y1}-, -[NH-(CH₂)_{y2}]ₓ₁- et -[O-(CH₂)_{y3}]ₓ₂-, y₁, y₂ et y₃ représentant, indépendamment les uns des autres, un nombre entier allant de 1 à 6, et x₁ et x₂ représentant, indépendamment l'un de l'autre, un nombre entier allant de 1 à 4.

De préférence, le composé de formule (I) selon l'invention est de formule (II) suivante : 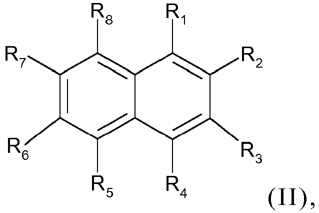 dans laquelle :
- un premier groupement choisi parmi R₁ à R₈ désigne le groupe de formule (III) suivante : 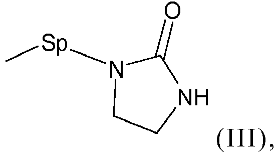 dans laquelle Sp est tel que défini précédemment ;
- un second groupement choisi parmi R₁ à R₈ désigne la fonction oxyde de nitrile,
les six autres groupements, identiques ou différents, représentant, indépendamment les uns des autres, un atome d'hydrogène ou une chaîne carbonée, aliphatique ou aromatique, linéaire, ramifiée ou cyclique, éventuellement substituée ou interrompue par un ou plusieurs hétéroatomes.

Avantageusement, ladite chaîne carbonée est inerte vis-à-vis de l'une ou l'autre des fonctions que sont la fonction imidazolidinone et la fonction oxyde de nitrile.

De manière préférée, ladite chaîne carbonée est saturée.

Ladite chaîne carbonée peut être un groupe alkyle en C₁-C₁₂, plus préférentiellement en C₁-C₆, encore plus préférentiellement en C₁-C₄, ou un groupe choisi parmi -OR', -NHR', -SR', R' étant un groupe alkyle, préférentiellement un groupe alkyle en C₁-C₁₂, plus préférentiellement en C₁-C₆, encore plus préférentiellement en C₁-C₄.

De manière préférée, R₂ ou R₈ désigne le groupe de formule (III).

Avantageusement, R₁ désigne la fonction oxyde de nitrile.

Selon un mode de réalisation particulier, R₁ désigne la fonction oxyde de nitrile, R₂ désigne le groupe de formule (III) et R₃ à R₈ représentent un atome d'hydrogène.

Selon un autre mode de réalisation particulier, R₁ désigne la fonction oxyde de nitrile, R₈ désigne le groupe de formule (III) et R₂ à R₇ représentent un atome d'hydrogène.

De préférence, le groupe Sp désigne le groupe -O-CH₂-CH₂-.

Selon un mode de réalisation particulier, le composé de formule (II) est choisi parmi un composé de formule (IV) suivante : 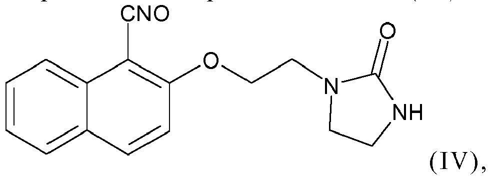 et un composé de formule (V) suivante : 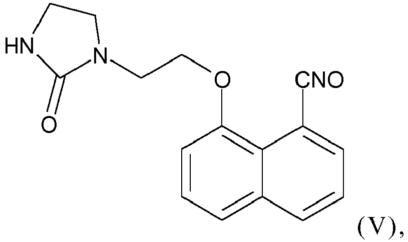 de préférence le composé de formule (IV).

Comme précisé précédemment, la composition de caoutchouc selon l'invention est à base d'au moins une charge renforçante.

La charge renforçante peut être de tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge.

Avantageusement, la charge est choisie parmi le noir de carbone, la silice et un coupage de ces deux charges, de préférence la silice.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs du type HAF, ISAF, SAF conventionnellement utilisés dans les pneumatiques (noirs dits de grade pneumatique). On peut aussi utiliser, selon les applications visées, des noirs de séries plus élevées FF, FEF, GPF, SRF. Les noirs de carbone pourraient être par exemple déjà incorporés à l'élastomère diénique sous la forme d'un masterbatch, avant ou après greffage, et de préférence après greffage (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃).

Le taux de charge renforçante dans la composition selon l'invention peut être compris entre 30 et 150 pce, plus préférentiellement entre 50 et 120 pce. L'optimum est différent selon les applications particulières visées.

Selon un mode de réalisation, la charge renforçante comprend majoritairement de la silice, de préférence le taux de noir de carbone présent dans la composition étant compris entre 2 et 20 pce.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment de manière connue des silanes polysulfurés, dits "symétriques" ou "asymétriques" selon leur structure particulière, tels que décrits par exemple dans les demandes WO03/002648.

Dans les compositions de caoutchouc comprises dans le pneumatique selon l'invention, la teneur en agent de couplage est préférentiellement comprise entre 4 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère diénique.

Selon un mode de réalisation préféré, la composition comprend un polyisoprène de synthèse et de la silice. De façon encore préférée, le polyisoprène de synthèse est le seul élastomère diénique présent dans la composition, et la silice est la seule charge renforçante présente dans la composition.

La composition de caoutchouc selon l'invention est également à base d'au moins un agent de réticulation chimique.

L'agent de réticulation permet la formation de liaisons covalentes entre les chaînes élastomères, ce qui leur confère des propriétés élastiques. La réticulation chimique peut se faire au moyen d'un système de vulcanisation ou bien au moyen de composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Avantageusement, l'agent de réticulation chimique comprend de 0,5 à 12 pce de soufre, de préférence de 1 à 10 pce de soufre, ou de 0,01 à 10 pce d'un ou plusieurs composés peroxyde.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants, des pigments, des agents de protection comme des antioxydants, des charges non renforçantes.

Les composés mentionnés ci-dessus et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

Un autre objet de l'invention est le procédé de préparation d'une composition de caoutchouc selon l'invention.

La composition de caoutchouc selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation chimique.

De manière générale, tous les constituants de base de la composition comprise dans le pneumatique de l'invention, à l'exception du système de réticulation chimique, à savoir la ou les charges renforçantes, l'agent de couplage le cas échéant, sont incorporés de manière intime, par malaxage, à l'élastomère diénique ou aux élastomères diéniques au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon un premier mode de réalisation de l'invention, l'élastomère diénique a été greffé par le composé de formule (I) préalablement à la fabrication de la composition de caoutchouc. Ainsi, dans ce cas, c'est l'élastomère diénique greffé qui est introduit au cours de la première phase dite non-productive. Ainsi selon ce premier mode de réalisation du procédé, celui-ci comprend les étapes suivantes:
- modifier l'élastomère diénique par greffage post-polymérisation en solution ou en masse du composé de formule (I) telle que définie précédemment ;
- incorporer à l'élastomère diénique ainsi greffé par le composé de formule (I), la charge renforçante et tous les constituants de base de la composition, à l'exception du système de réticulation chimique, en malaxant thermomécaniquement le tout, en une ou plusieurs fois, jusqu'à atteindre une température maximale comprise entre 130°C et 200°C, de préférence entre 145°C et 185°C ;
- refroidir l'ensemble à une température inférieure ou égale à 100°C ;
- incorporer ensuite l'agent de réticulation chimique ;
- malaxer le tout jusqu'à une température maximale inférieure ou égale à 120°C ;
- extruder ou calandrer la composition de caoutchouc ainsi obtenue.

Avantageusement, les étapes de ce premier mode de réalisation du procédé sont successives.

Selon un second mode de réalisation de l'invention, le greffage de l'élastomère diénique par le composé de formule (I) est effectué concomitamment à la fabrication de la composition de caoutchouc. Dans ce cas, tant l'élastomère diénique non encore greffé que le composé de formule (I) sont introduits au cours de la première phase dite non-productive. De manière préférentielle, la charge renforçante est alors ajoutée subséquemment au cours de cette même phase non-productive afin de prévenir toute réaction parasite avec le composé de formule (I).

Ainsi, selon ce deuxième mode de réalisation du procédé, celui-ci comprend les étapes suivantes:
- incorporer au cours du mélangeage en masse à l'élastomère diénique, le composé de formule (I) telle que définie précédemment, à une température et pendant une durée telle que le rendement de greffage soit de préférence supérieur ou égal à 60%, plus préférentiellement supérieur ou égal à 80%, et, de préférence subséquemment, la charge renforçante, ainsi que tous les constituants de base de la composition, à l'exception du système de réticulation chimique, en malaxant thermomécaniquement le tout, en une ou plusieurs fois, jusqu'à atteindre une température maximale comprise entre 130°C et 200°C, de préférence entre 145°C et 185°C.
- refroidir l'ensemble à une température inférieure ou égale à 100°C,
- incorporer ensuite l'agent de réticulation chimique,
- malaxer le tout jusqu'à une température maximale inférieure ou égale à 120°C,
- extruder ou calandrer la composition de caoutchouc ainsi obtenue.

Avantageusement, les étapes de ce deuxième mode de réalisation du procédé sont successives.

Le greffage du composé de formule (I) peut être réalisé en masse, par exemple dans un mélangeur interne ou un mélangeur externe tel qu'un mélangeur à cylindres. Le greffage est alors mis en œuvre soit à une température du mélangeur externe ou du mélangeur interne inférieure à 60°C, suivi d'une étape de réaction de greffage sous presse ou en étuve à des températures allant de 80°C à 200°C, soit à une température du mélangeur externe ou du mélangeur interne supérieure à 60°C sans traitement thermique postérieur.

Le greffage du composé de formule (I) peut également être effectué en solution en continu ou en discontinu. L'élastomère diénique ainsi modifié peut être séparé de sa solution par tout type de moyen connu par l'homme de l'art et en particulier par une opération de stripping à la vapeur d'eau.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception du système de réticulation chimique. La durée totale du malaxage, dans cette phase non-productive, est de préférence comprise entre 1 et 15 min. Après refroidissement du mélange ainsi obtenu au cours de la première phase non-productive, on incorpore alors le système de réticulation chimique à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme semi-fini de pneumatique pour véhicule.

L'invention a également pour objet un pneumatique comprenant une composition de caoutchouc selon l'invention. Un autre objet de l'invention est un pneumatique poids-lourd comportant une bande de roulement constituée d'une composition de caoutchouc selon l'invention.

La présente invention est en outre illustrée par les exemples non limitatifs suivants.

### EXEMPLES

### Molécules

L'analyse structurale ainsi que la détermination des puretés molaires des molécules de synthèses sont réalisées par une analyse RMN. Les spectres sont acquis sur un spectromètre Avance 3 400 MHz BRUKER équipé d'une sonde "large bande" BBFO-zgrad 5 mm. L'expérience RMN ¹H quantitative, utilise une séquence simple impulsion 30° et un délai de répétition de 3 secondes entre chacune des 64 acquisitions. Les échantillons sont solubilisés dans un solvant deutéré, le diméthylsulfoxide deutéré (DMSO) sauf indication contraire. Le solvant deutéré est également utilisé pour le signal de lock. Par exemple, la calibration est réalisée sur le signal des protons du DMSO deutéré à 2.44 ppm par rapport à une référence TMS à 0ppm. Le spectre RMN ¹H couplé aux expériences 2D HSQC ¹H/¹³C et HMBC ¹H/¹³C permettent la détermination structurale des molécules (cf tableaux d'attributions). Les quantifications molaires sont réalisées à partir du spectre RMN 1D ¹H quantitatif.

L'analyse par spectrométrie de masse est réalisée en injection directe par un mode d'ionisation en électrospray (ID/ESI). Les analyses ont été réalisées sur un spectromètre HCT Bruker (débit 600 µL/min, pression du gaz nébuliseur 10 psi, débit du gaz nébuliseur 4 L/min).

### Molécule greffée sur SBR ou IR

La détermination du taux molaire de l'oxyde de 2-[2-(2-oxoimidazolidin-1-yl)éthoxy]-1-naphtonitrile greffé sur SBR ou IR est réalisée par une analyse RMN. Les spectres sont acquis sur un spectromètre 500 MHz BRUKER équipé d'une «CryoSonde BBFO-zgrad-5 mm». L'expérience RMN ¹H quantitative, utilise une séquence simple impulsion 30° et un délai de répétition de 5 secondes entre chaque acquisition. Les échantillons sont solubilisés dans le chloroforme deutéré (CDCl₃) dans le but d'obtenir un signal de «lock». Des expériences RMN 2D ont permis de vérifier la nature du motif greffé grâce aux déplacements chimiques des atomes de carbone et de proton.

### Essais de traction

Ces essais de traction permettent de déterminer les contraintes d'élasticité et les propriétés à la rupture. Sauf indication différente, ils sont effectués conformément à la norme française NF T 46-002 de septembre 1988.

Les contraintes à la rupture (en MPa) et les allongements à la rupture (en base 100) sont mesurés à 23°C ± 2°C et à 100°C ± 2°C, selon la norme NF T 46-002.

### Propriétés dynamiques

Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente (100°C). On effectue un balayage en amplitude de déformation de 0,1% à 100% (cycle aller), puis de 100% à 0,1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)max.

### I. Synthèse de l'oxyde de 2-[2-(2-oxoimidazolidin-1-yl)éthoxy]-1-naphtonitrile

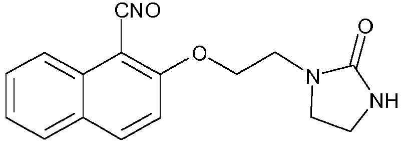

L'oxyde de 2-[2-(2-oxoimidazolidin-1-yl)éthoxy]-1-naphtonitrile est synthétisé en six étapes, nommées étape al, étape a2, étape b1, étape b2, étape c et étape d.

L'étape a1 est réalisée selon le protocole 1, l'étape a2 selon le protocole 2, l'étape b1 selon le protocole 3. Les étapes b2 et c sont réalisées selon le protocole 4. L'étape d est réalisée selon le protocole 5.

### Etape a1 : préparation du 2-hydroxy-1-naphthaldéhyde

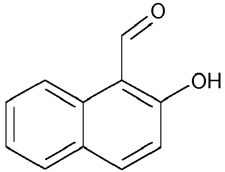

### Protocole 1 :

Ce composé peut être obtenu à partir du napthol par une réaction de formylation selon le protocole dit de Reimer-Tiemann décrit dans Organic Syntheses, 22, 63-4; 1942 par Russell, Alfred et Lockhart, Luther B. ou dans Organic Reactions (Hoboken, NJ, United States), 28, 1982 par Wynberg, Hans et Meijer, Egbert W., ou selon la procédure décrite par Casiraghi, Giovanni et al. dans Journal of the Chemical Society, Perkin Transactions 1: Organic and Bio-Organic Chemistry (1972-1999), (9), 1862-5, 1980 ou encore par une réaction de Vilsmeier décrite par Jones, Gurnos et Stanforth, Stephen P. dans Organic Reactions (Hoboken, NJ, United States), 49, 1997.

Le 2-hydroxy-1-napthaldéhyde est commercial. Il peut par exemple être obtenu chez Aldrich (CAS 708-06-5).

### Etape a2 : préparation de la 1-(2-chloroéthyl)imidazolidin-2-one

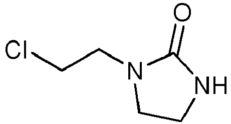

### Protocole 2 :

Ce composé peut être obtenu selon un protocole décrit dans la demande de brevet WO 2012/007684.

### Etape b1 : préparation du 2-(2-(2-oxoimidazolidin-1-yl)éthoxy)-1-naphthaldéhyde

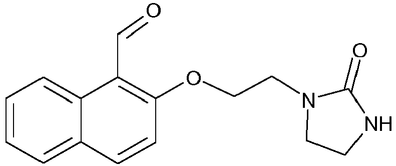

### Protocole 3 :

Un mélange de 2-hydroxy-1-naphthaldéhyde (20,0 g, 0,116 mol), de carbonate de potassium (24,08 g, 0,174 mol), et de 1-(2-chloroéthyl)imidazolidin-2-one (25,9 g, 0,174 mol) dans le DMF (20 mL) est chauffé à 75°C (T_{bain}) pendant 3,0-3,5 heures. Ensuite, une seconde portion de 1-(2-chloroéthyl)imidazolidin-2-one (17,26 g, 0,116 mol) est ajoutée et le milieu réactionnel est agité pendant 9 à 10 heures à 75°C (T_{bain}). Après un retour à 40-45°C, le milieu réactionnel est versé dans une solution d'hydroxyde de sodium (10g, 0,25 mol) dans l'eau (700 mL). Le mélange est agité pendant 10 à 15 minutes. Le précipité est filtré et lavé sur le filtre par l'eau (3 fois 400 mL).

Un solide gris (31,51g, rendement massique de 95 %) est obtenu.

La pureté molaire est supérieure à 85 % (RMN ¹H).

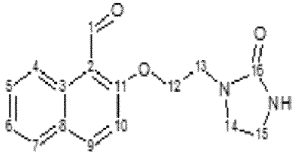

| **N°** | **δ ¹H (ppm)** | **δ ¹³C (ppm)** |
|---|---|---|
| 1 | 10.86 | 191.6 |
| 2 | / | 116.7 |
| 3 | / | 131.5 |
| 4 | 9.19 | 124.9 |
| 5 | 7.56 | 130 |
| 6 | 7.37 | 124.9 |
| 7 | 7.71 | 128.3 |
| 8 | / | 128.6 |
| 9 | 7.99 | 137.7 |
| 10 | 7.2 | 113.1 |
| 11 | / | 162.9 |
| 12 | 4.31 | 68.7 |
| 13 | 3.63 | 13.4 |
| 14 | 3.59 | 16.8 |
| 15 | 3.72 | 38.3 |
| 16 | / | 162.6 |

| | | |
|---|---|---|
| Solvant: CDCl3 | | |

### Etapes b2 et c : préparation de l'oxime de 2-(2-(2-oxoimidazolidin-1-yl)éthoxy)-1-naphthaldéhyde

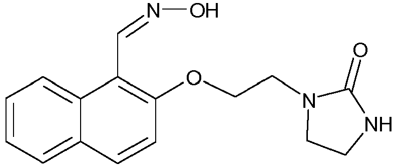

Le produit isolé à l'issue du protocole 3 est utilisé dans le protocole 4 suivant.

### Protocole 4 :

A une solution de 2-(2-(2-oxoimidazolidin-1-yl)éthoxy)-1-naphthaldéhyde (6,3 g, 22,2 mmol) dans l'éthanol (30 mL) à 45°C (T_{bain}), est ajoutée une solution d'hydroxylamine (2,05 g, 31,0 mmol, 50 % dans l'eau, Aldrich) dans l'éthanol (5 mL). Le milieu réactionnel est agité pendant 4 heures à 55 °C (T_{bain}). Après un retour à 40°C, de l'acétate d'éthyle (30 mL) est ajouté goutte à goutte pendant 15 minutes. Le précipité est filtré, lavé sur le filtre par un mélange éthanol/acétate d'éthyle.

Un solide blanc (4,00g, rendement massique de 60 %) est obtenu.

La pureté molaire estimée par RMN ¹H est supérieure à 95 %. CCM : Rf = 0,10 (SiO₂ ; EtOAc) ; révélation par UV et I₂.

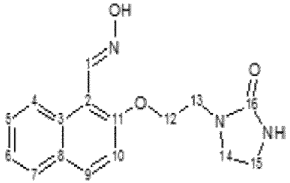

| **N°** | **δ ¹H (ppm)** | **δ ¹³C (ppm)** |
|---|---|---|
| 1 | 8.75 | 147.5 |
| 2 | / | 115.9 |
| 3 | / | 133 |
| 4 | 8.78 | 127 |
| 5 | 7.46 | 128.5 |
| 6 | 7.35 | 125.2 |
| 7 | 7.88 | 132.8 |
| 8 | / | 130.9 |
| 9 | 7.79 | 129.4 |
| 10 | 7.36 | 115.2 |
| 11 | / | 157.1 |
| 12 | 4.28 | 69.3 |
| 13 | 3.59 | 44.4 |
| 14 | 3.64 | 47.6 |
| 15 | 3.40 | 39.3 |
| 16 | / | 165.3 |

| | | |
|---|---|---|
| Solvant: MeOH | | |

### Etape d : préparation de l'oxyde de 2-[2-(2-oxoimidazolidin-1-yl)éthoxy]-1-naphtonitrile

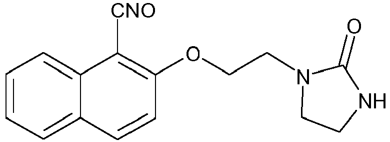

### Protocole 5 :

A une solution d'oxime de 2-(2-(2-oxoimidazolidin-1-yl)éthoxy)-1-naphthaldéhyde (7,5g, 25,06 mmol) dans le dichlorométhane (300 mL) refroidi à 4°C (T_{bain} = 0°C), est ajoutée, goutte à goutte, une solution aqueuse de NaOCl (78 % g C1/L, 35 mL) pendant 15 minutes. Le milieu réactionnel est agité pendant 60 à 70 minutes à une température de 4-5°C. La phase organique est séparée. La phase aqueuse est extraite par le dichlorométhane (25 mL). Les solutions organiques réunies sont lavées par l'eau (2 fois par 25 mL). Le solvant est évaporé sous pression réduite jusqu'à 40-50 mL. De l'éther de pétrole 40/60 (60 mL) est ajouté pour la cristallisation. Le précipité obtenu est filtré et lavé par l'éther de pétrole 40/60 (2 fois par 30 mL).

Un solide blanc (6,46 g, rendement massique de 87 %) est obtenu.

La pureté molaire estimée par RMN ¹H est supérieure à 99 %.

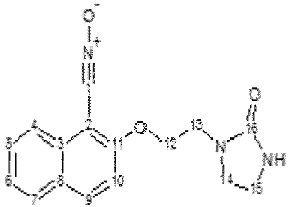

| **N°** | **δ ¹H (ppm)** | **δ ¹³C (ppm)** |
|---|---|---|
| 1 | / | - |
| 2 | / | 96.7 |
| 3 | / | 134.1 |
| 4 | 7.92 | 124 |
| 5 | 7.56 | 128.9 |
| 6 | 7.39 | 125.2 |
| 7 | 7.77 | 128.6 |
| 8 | / | 128.5 |
| 9 | 7.89 | 133 |
| 10 | 7.18 | 112.7 |
| 11 | / | 160.5 |
| 12 | 4.31 | 69.4 |
| 13 | 3.64 | 43.4 |
| 14 | 3.76 | 47.3 |
| 15 | 3.42 | 38.5 |
| 16 | / | 162.5 |

| | | |
|---|---|---|
| Solvant: CDCl3 | | |

### II. Fabrication d'un SBR greffé par l'oxyde de 2-[2-(2-oxoimidazolidin-1-yl)éthoxy]-1-naphtonitrile

L'oxyde de 2-[2-(2-oxoimidazolidin-1-yl)éthoxy]-1-naphtonitrile obtenu précédemment (à l'issue du protocole 5) est utilisé.

On incorpore de l'oxyde de 2-[2-(2-oxoimidazolidin-1-yl)éthoxy]-1-naphtonitrile (0,88g ; 2,97 mmol) à 20g de SBR (contenant 26,5% en poids de styrène et 25% en poids d'unité butadiène-1,2, de Mn=150000 g/mol et Ip=1,84) sur outil à cylindres (mélangeur externe à 23°C). Le mélange est homogénéisé en 15 passes portefeuille. Cette phase de mélangeage est suivie d'un traitement thermique à 120°C pendant 10 minutes sous presse à 10 bars de pression.

L'analyse par RMN ¹H a permis de démontrer un taux molaire de greffage de 0,81% avec un rendement molaire de greffage de 80%.

| N° | δ ¹H (ppm) | δ ¹³C (ppm) |
|---|---|---|
| 1 | / | - |
| 2 | / | - |
| 3 | / | - |
| 4 | 7,70 | 129,5 |
| 5 | 7,61 | 126,7 |
| 6 | 7,77 | 123,7 |
| 7 | 7,29 | 125,9 |
| 8 | / | - |
| 9 | 7,21 | 123,0 |
| 10 | 7,10 | 112,3 |
| 11 | / | - |
| 12 | 4,11 | 66,5 |
| 13 | 3,33 | 44,6 |
| 14 | 3,34 + 3,49 (H non eq*) | 42,0 |
| 15 | 3,18 | 37,2 |
| 16 | / | - |

| | | |
|---|---|---|
| (*) ¹H non équivalents : protons portés par le même atome de carbone n'ayant pas le même déplacement chimique ¹H. | | |

### III. Fabrication d'un IR greffé par l'oxyde de 2-[2-(2-oxoimidazolidin-1-yl)éthoxy]-1-naphtonitrile

L'oxyde de 2-[2-(2-oxoimidazolidin-1-yl)éthoxy]-1-naphtonitrile obtenu précédemment (à l'issue du protocole 5) est utilisé.

On incorpore de l'oxyde de 2-[2-(2-oxoimidazolidin-1-yl)éthoxy]-1-naphtonitrile (0,26g ; 0,88mmol) à 20g d'IR (contenant 98% en poids d'unité isoprène-1,4 cis et de Mn=375000 g/mol et Ip=3,6) sur outil à cylindres (mélangeur externe à 23°C). Le mélange est homogénéisé en 15 passes portefeuille. Cette phase de mélangeage est suivie d'un traitement thermique à 120°C pendant 10 minutes sous presse à 10 bars de pression.

L'analyse par RMN ¹H a permis de démontrer un taux molaire de greffage de 0,26% avec un rendement molaire de greffage de 90%.

| N° | δ ¹H (ppm) | δ ¹³C (ppm) |
|---|---|---|
| 1 | / | - |
| 2 | / | - |
| 3 | / | - |
| 4 | 7,83 | 131,2 |
| 5 | 7,72 | 128,1 |
| 6 | 7,86 | 124,3 |
| 7 | 7,42 | 127,5 |
| 8 | / | - |
| 9 | 7,30 | 124,2 |
| 10 | 7,20 | 113,3 |
| 11 | / | - |
| 12 | 4,23 | 68,3 |
| 13 | 3,53 | 46,5 |
| 14 | 3,56 | 43,6 |
| 15 | 3,33 | 38,4 |
| 16 | / | - |

### IV. Compositions de caoutchouc

### 1) Préparation des compositions de caoutchouc

Quatre compositions de caoutchouc sont préparées.

Des compositions de caoutchouc comprenant le SBR ou l'IR greffé par l'oxyde de 2-[2-(2-oxoimidazolidin-1-yl)éthoxy]-1-naphtonitrile (appelé dans la suite composé A) sont préparées. Des compositions de caoutchouc comprenant le SBR ou l'IR greffé par l'oxyde de 2,4,6-triméthyl-3-[2-(2-oxoimidazolidin-1-yl)éthoxy]benzonitrile (appelé dans la suite composé B) sont également préparées.

On procède pour les essais qui suivent de la manière suivante selon deux cas :
- Cas A : on introduit dans un mélangeur interne Polylab de 85cm³, rempli à 70% et dont la température initiale de cuve est d'environ 110°C, le ou les élastomères diéniques greffés, comme cela est décrit au point II ou au point III.
- Cas B : on introduit dans un mélangeur interne Polylab de 85cm³, rempli à 70% et dont la température initiale de cuve est d'environ 110°C, le ou les élastomères diéniques non greffés. Pour les mélanges concernant le composé A et le composé B, le composé A ou le composé B est introduit en même temps que l'élastomère diénique et est conduit un travail thermomécanique d'une minute à 120°C.

Ensuite, pour chacune des quatre compositions, on introduit la ou les charges renforçantes éventuelles, l'agent de couplage éventuel puis, après une à deux minutes de malaxage, les divers autres ingrédients à l'exception du système de vulcanisation. On conduit alors un travail thermomécanique (phase non-productive) en une étape (durée totale du malaxage égale à environ 5 minutes), jusqu'à atteindre une température maximale de "tombée" de 160°C. On récupère le mélange ainsi obtenu, on le refroidit puis on ajoute le système de vulcanisation (soufre) sur un mélangeur externe (homo-finisseur) à 25°C, en mélangeant le tout (phase productive) pendant environ 5 à 6 minutes.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### a) Compositions de caoutchouc SBR

Les compositions de caoutchouc concernant le SBR sont données dans le tableau 1. La composition de caoutchouc comprenant le SBR greffé par le composé A est appelée composition 1 (composition selon l'invention). La composition de caoutchouc comprenant le SBR greffé par le composé B est appelée composition 2 (composition comparative). Les teneurs sont exprimées en pce. Le taux molaire de composé greffé sur le SBR est de 0,3% aussi bien pour le SBR-g-A que le SBR-g-B.

**Tableau 1**

| Compositions | 1 (invention) | 2 (comparative) |
|---|---|---|
| SBR-g-A (1) | 101,4 | - |
| SBR-g-B (2) | - | 101,3 |
| Silice (3) | 55 | 55 |
| Silane TESPT (4) | 5,5 | 5,5 |
| N234 (5) | 3 | 3 |
| 6PPD (6) | 1,5 | 1,5 |
| TMQ (7) | 1 | 1 |
| Paraffine 6266 (8) | 1 | 1 |
| ZnO (9) | 2,7 | 2,7 |
| Acide stéarique (10) | 2,5 | 2,5 |
| CBS (11) | 1,8 | 1,8 |
| Soufre (12) | 1,5 | 1,5 |

(1) SBR greffé par le composé A
(2) SBR greffé par le composé B
(3) Silice « Zeosil 1165MP » - société Rhodia sous forme de microperles (BET et CTAB d'environ 150-160 m²/g)
(4) TESPT (« S169 » - société Degussa)
(5) Noir de carbone N234
(6) Antioxydant « Santoflex 6PPD » - société Solutia
(7) 2,2,4-triméthyl-1,2-dihydroquinoline - société Flexys
(8) Paraffine
(9) Oxyde de zinc (grade industriel - Société Umicore)
(10) Stéarine (« Pristerene 4031 » - Société Uniquema)
(11) CBS : N-cyclohexyl-2-benzothiazyl-sulfénamide (« Santocure CBS » - Société Flexys)

### b) Compositions de caoutchouc IR

Les compositions de caoutchouc concernant l'IR sont données dans le tableau 2. La composition de caoutchouc comprenant l'IR greffé par le composé A est appelée composition 3 (composition selon l'invention). La composition de caoutchouc comprenant l'IR greffé par le composé B est appelée composition 4 (composition comparative). Le taux molaire de composé greffé sur le IR est de 0,6% aussi bien pour le IR-g-A que le IR-g-B.

**Tableau 2**

| Compositions | 3 (invention) | 4 (comparative) |
|---|---|---|
| IR-g-A (1) | 102.6 | - |
| IR-g-B (2) | - | 103.5 |
| Silice (3) | 55 | 55 |
| Silane TESPT (4) | 5,5 | 5,5 |
| N234 (5) | 3 | 3 |
| 6PPD (6) | 1,5 | 1,5 |
| TMQ (7) | 1 | 1 |
| Paraffine 6266 (8) | 1 | 1 |
| ZnO (9) | 2,7 | 2,7 |
| Acide stéarique (10) | 2,5 | 2,5 |
| CBS (11) | 1,8 | 1,8 |
| Soufre | 1,5 | 1,5 |

(1) IR greffé par le composé A
(2) IR greffé par le composé B
(3) Silice « Zeosil 1165MP » - société Rhodia sous forme de microperles (BET et CTAB d'environ 150-160 m²/g)
(4) TESPT (« S169 » - société Degussa)
(5) Noir de carbone N234
(6) Antioxydant « Santoflex 6PPD » - société Solutia
(7) 2,2,4-triméthyl-1,2-dihydroquinoline
(8) Paraffine
(9) Oxyde de zinc (grade industriel - Société Umicore)
(10) Stéarine (« Pristerene 4031 » - Société Uniquema)
(11) CBS : N-cyclohexyl-2-benzothiazyl-sulfénamide (« Santocure CBS » - Société Flexys)

### 2) Essais de caractérisation - Résultats

### a) Compositions de caoutchouc SBR

Les propriétés des compositions 1 et 2 sont comparées. Les résultats sont reportés dans le tableau 3 :

**Tableau 3**

| Compositions | 1 (inv) | 2 (comp) |
|---|---|---|
| **Propriétés en élongation à 23°C (base 100)** | | |
| Contrainte rupture | 100 | 100 |

| **Propriétés en élongation à 100°C (base 100)** | | |
|---|---|---|
| Contrainte rupture | 106 | 100 |

| **Propriétés dynamiques à 23°C** | | |
|---|---|---|
| G* 10% (MPa) | 3,41 | 3,32 |
| Tan δ max | 0,17 | 0,17 |

| **Propriétés dynamiques à 100°C** | | |
|---|---|---|
| G* 10% (MPa) | 2,18 | 2,05 |
| Tan δ max | 0,11 | 0,12 |

La composition 1 présente à 100°C une meilleure contrainte à la rupture que la composition 2. Par ailleurs, la composition 1 présente une meilleure rigidité que la composition 2, accompagnée d'une conservation des propriétés d'hystérèse.

La composition de caoutchouc selon l'invention possède donc des propriétés améliorées par rapport à la composition de caoutchouc comparative.

### b) Compositions de caoutchouc IR

Les propriétés des compositions 3 et 4 sont comparées. Les résultats sont reportés dans le tableau 4 :

**Tableau 4**

| Compositions | 3 (inv) | 4 (comp) |
|---|---|---|
| **Propriétés en élongation à 23°C (base 100)** | | |
| Contrainte rupture | 111 | 100 |

| **Propriétés en élongation à 100°C (base 100)** | | |
|---|---|---|
| Contrainte rupture | 102 | 100 |

| **Propriétés dynamiques à 23°C** | | |
|---|---|---|
| G* 10% (MPa) | 1,56 | 1,55 |
| Tan δ max | 0,11 | 0,10 |

| **Propriétés dynamiques à 100°C** | | |
|---|---|---|
| G* 10% (MPa) | 1,12 | 1,11 |
| Tan δ max | 0,07 | 0,06 |

La composition 3 présente une meilleure contrainte à la rupture que la composition 4, accompagnée d'une conservation des propriétés de rigidité et d'hystérèse, quelle que soit la température.

La composition de caoutchouc selon l'invention possède donc des propriétés améliorées par rapport à la composition de caoutchouc comparative.

## Revendications

1. Composition de caoutchouc à base d'au moins un élastomère diénique, au moins une charge renforçante, au moins un agent de réticulation chimique, et au moins un composé, éventuellement déjà greffé sur l'élastomère, de formule (I) suivante : 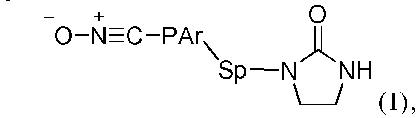 dans laquelle :
- PAr désigne un groupe polyaromatique comprenant au moins deux cycles hydrocarbures aromatiques condensés, chacun desdits cycles aromatiques condensés étant éventuellement substitué par une ou plusieurs chaînes carbonées, identiques ou différentes, indépendantes les unes des autres, aliphatiques ou aromatiques, linéaires, ramifiées ou cycliques, éventuellement substituées ou interrompues par un ou plusieurs hétéroatomes ;
- Sp représente un atome ou un groupe d'atomes ;

2. Composition selon la revendication 1, **caractérisée en ce que** le taux de composé de formule (I) varie de 0,01 à 5% molaire, de préférence de 0.01 à 1% molaire, plus préférentiellement de 0,1 à 1% molaire.

3. Composition selon la revendication 1 ou 2, **caractérisée en ce que** l'élastomère diénique est essentiellement saturé, de préférence choisi parmi les copolymères d'éthylène-propylène-monomère diène et les caoutchoucs butyle.

4. Composition selon la revendication 1 ou 2, **caractérisée en ce que** l'élastomère diénique est essentiellement insaturé, de préférence choisi parmi le caoutchouc naturel, les polyisoprènes de synthèse, les polybutadiènes, les copolymères de butadiène, les copolymères d'isoprène et les mélanges de ces élastomères.

5. Composition selon l'une quelconque des revendications 1, 2 ou 4, **caractérisée en ce que** l'élastomère diénique est choisi parmi les polyisoprènes de synthèse, les polybutadiènes, les copolymères de butadiène, les copolymères d'isoprène et les mélanges de ces élastomères.

6. Composition selon l'une quelconque des revendications précédentes, **caractérisée en ce que** le groupe Sp est une chaîne alkylène linéaire ou ramifiée en C₁-C₂₄, préférentiellement en C₁-C₁₀, plus préférentiellement en C₁-C₆, éventuellement interrompue par un ou plusieurs atomes d'azote, de soufre ou d'oxygène.

7. Composition selon l'une quelconque des revendications précédentes, **caractérisée en ce que** le composé de formule (I) est de formule (II) suivante : 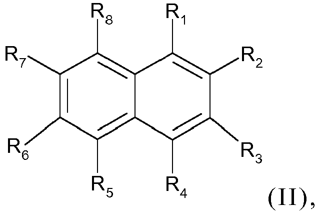 dans laquelle :
- un premier groupement choisi parmi R₁ à R₈ désigne le groupe de formule (III) suivante : 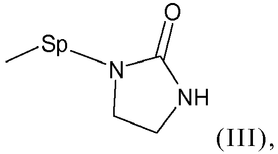
dans laquelle Sp est tel que défini à la revendication 1 ou 6 ;
- un second groupement choisi parmi R₁ à R₈ désigne la fonction oxyde de nitrile,
les six autres groupements, identiques ou différents, représentant, indépendamment les uns des autres, un atome d'hydrogène ou une chaîne carbonée, aliphatique ou aromatique, linéaire, ramifiée ou cyclique, éventuellement substituée ou interrompue par un ou plusieurs hétéroatomes.

8. Composition selon la revendication 7, **caractérisée en ce que** le composé de formule (II) est choisi parmi un composé de formule (IV) suivante : 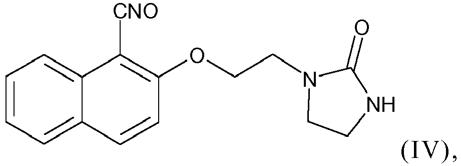 et un composé de formule (V) suivante : 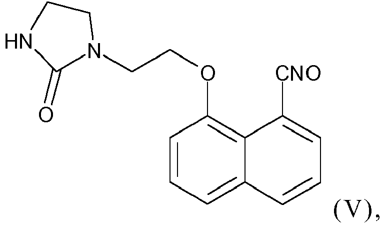 de préférence le composé de formule (IV).

9. Composition selon l'une quelconque des revendications précédentes, **caractérisée en ce que** la charge est choisie parmi le noir de carbone, la silice et un coupage de ces deux charges.

10. Composition selon l'une quelconque des revendications précédentes, **caractérisée en ce que** l'agent de réticulation chimique comprend de 0,5 à 12 pce de soufre, de préférence de 1 à 10 pce de soufre, ou de 0,01 à 10 pce d'un ou plusieurs composés peroxyde.

11. Procédé de préparation d'une composition de caoutchouc telle que définie à l'une quelconque des revendications précédentes, comprenant les étapes suivantes :
- modifier l'élastomère diénique par greffage post-polymérisation en solution ou en masse du composé de formule (I) ;
- incorporer à l'élastomère diénique ainsi greffé par le composé de formule (I), la charge renforçante, en malaxant thermomécaniquement le tout, en une ou plusieurs fois, jusqu'à atteindre une température maximale comprise entre 130°C et 200°C ;
- refroidir l'ensemble à une température inférieure ou égale à 100°C ;
- incorporer ensuite l'agent de réticulation chimique ;
- malaxer le tout jusqu'à une température maximale inférieure à 120°C ;
- extruder ou calandrer la composition de caoutchouc ainsi obtenue.

12. Procédé de préparation d'une composition de caoutchouc telle que définie à l'une quelconque des revendications 1 à 10, comprenant les étapes suivantes :
- incorporer au cours du mélangeage en masse à l'élastomère diénique le composé de formule (I) et, de préférence subséquemment, la charge renforçante, en malaxant thermomécaniquement le tout, en une ou plusieurs fois, jusqu'à atteindre une température maximale comprise entre 130°C et 200°C, de préférence entre 145°C et 185°C ;
- refroidir l'ensemble à une température inférieure ou égale à 100°C ;
- incorporer ensuite l'agent de réticulation chimique ;
- malaxer le tout jusqu'à une température maximale inférieure à 120°C ;
- extruder ou calandrer la composition de caoutchouc ainsi obtenue.

13. Pneumatique comprenant une composition de caoutchouc telle que définie à l'une quelconque des revendications 1 à 10.

14. Pneumatique poids-lourd comportant une bande de roulement constituée d'une composition de caoutchouc telle que définie à l'une quelconque des revendications 1 à 10.

## Patentansprüche

1. Kautschukzusammensetzungen auf Basis von mindestens einem Dienelastomer, mindestens einem verstärkenden Füllstoff, mindestens einem chemischen Vernetzungsmittel und mindestens einer gegebenenfalls bereits auf das Elastomer aufgepfropften Verbindung der folgenden Formel (I) : 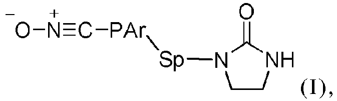 in der:
- PAr für eine polyaromatische Gruppe mit mindestens zwei kondensierten aromatischen Kohlenwasserstoffringen steht, wobei jeder dieser kondensierten aromatischen Ringe gegebenenfalls durch eine oder mehrere gleiche oder verschiedene, voneinander unabhängige, aliphatische oder aromatische, linear verzweigte oder cyclische Kohlenstoffketten, die gegebenenfalls durch ein oder mehrere Heteroatome substituiert oder unterbrochen sind, substituiert ist;
- Sp für ein Atom oder eine Gruppe von Atomen steht.

2. Zusammensetzung nach Anspruch 1, **dadurch gekennzeichnet, dass** der Gehalt an Verbindung der Formel (I) im Bereich von 0,01 bis 5 Mol-%, vorzugsweise von 0,01 bis 1 Mol-%, weiter bevorzugt von 0,1 bis 1 Mol-%, liegt.

3. Zusammensetzung nach Anspruch 1 oder 2, **dadurch gekennzeichnet, dass** das Dienelastomer im Wesentlichen gesättigt ist und vorzugsweise aus Ethylen-Propylen-Dien-Monomer-Copolymeren und Butylkautschuken ausgewählt ist.

4. Zusammensetzung nach Anspruch 1 oder 2, **dadurch gekennzeichnet, dass** das Dienelastomer im Wesentlichen ungesättigt ist und vorzugsweise aus Naturkautschuk, synthetischen Polyisoprenen, Polybutadienen, Butadien-Copolymeren, Isopren-Copolymeren und Mischungen dieser Elastomere ausgewählt ist.

5. Zusammensetzung nach einem der Ansprüche 1, 2 oder 4, **dadurch gekennzeichnet, dass** das Dienelastomer aus synthetischen Polyisoprenen, Polybutadienen, Butadien-Copolymeren, Isopren-Copolymeren und Mischungen dieser Elastomere ausgewählt ist.

6. Zusammensetzung nach einem der vorhergehenden Ansprüche, **dadurch gekennzeichnet, dass** die Gruppe Sp für eine lineare oder verzweigte C₁-C₂₄-vorzugsweise C₁-C₁₀- und weiter bevorzugt C₁-C₆-Alkylenkette, die gegebenenfalls durch ein oder mehrere Stickstoff-, Schwefel- oder Sauerstoffatome unterbrochen ist, steht.

7. Zusammensetzung nach einem der vorhergehenden Ansprüche, **dadurch gekennzeichnet, dass** die Verbindung der Formel (I) die folgende Formel (II) aufweist: 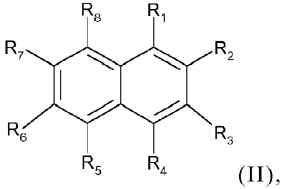 in der:
- eine erste Gruppe, die aus R₁ bis R₈ ausgewählt ist, für die Gruppe der folgenden Formel (III) steht: 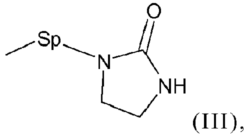 in der Sp wie in Anspruch 1 oder 6 definiert ist;
- eine zweite Gruppe, die aus R₁ bis R₈ ausgewählt ist und von der ersten Gruppe verschieden ist, für die Nitriloxid-Funktion steht,
wobei die sechs anderen Gruppen, die gleich oder verschieden sind, unabhängig voneinander für ein Wasserstoffatom oder eine aliphatische oder aromatische, lineare, verzweigte oder cyclische Kohlenstoffkette, die gegebenenfalls durch ein oder mehrere Heteroatome substituiert oder unterbrochen ist, stehen.

8. Zusammensetzung nach Anspruch 7, **dadurch gekennzeichnet, dass** die Verbindung der Formel (II) aus einer Verbindung der folgenden Formel (IV) : 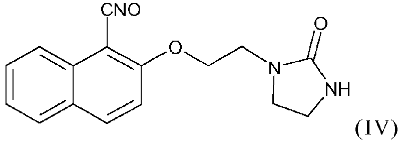 und einer Verbindung der folgenden Formel (V): 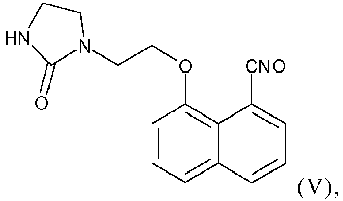 vorzugsweise der Verbindung der Formel (IV), ausgewählt ist.

9. Zusammensetzung nach einem der vorhergehenden Ansprüche, **dadurch gekennzeichnet, dass** der Füllstoff aus Ruß, Kieselsäure und einer Mischung dieser beiden Füllstoffe ausgewählt ist.

10. Zusammensetzung nach einem der vorhergehenden Ansprüche, **dadurch gekennzeichnet, dass** das chemische Vernetzungsmittel 0,5 bis 12 phe Schwefel, vorzugsweise 1 bis 10 phe Schwefel, oder 0,01 bis 10 phe einer oder mehrerer Peroxidverbindungen umfasst.

11. Verfahren zur Herstellung einer Kautschukzusammensetzung gemäß einem der vorhergehenden Ansprüche, das die folgenden Schritte umfasst:
- Modifizieren des Dienelastomers durch Aufpfropfen der Verbindung der Formel (I) nach der Polymerisation in Lösung oder in Substanz;
- Einarbeiten des verstärkenden Füllstoffs in das so mit der Verbindung der Formel (I) gepfropfte Dienelastomer durch ein- oder mehrmaliges thermomechanisches Kneten des Ganzen bis zum Erreichen einer Höchsttemperatur zwischen 130 °C und 200 °C;
- Abkühlen des Ganzen auf eine Temperatur kleiner oder gleich 100 °C;
- anschließendes Einarbeiten des chemischen Vernetzungsmittels;
- Kneten des Ganzen bis zu einer Höchsttemperatur von weniger als 120 °C;
- Extrudieren oder Kalandrieren der so erhaltenen Kautschukzusammensetzung.

12. Verfahren zur Herstellung einer Kautschukzusammensetzung gemäß einem der Ansprüche 1 bis 10, das die folgenden Schritte umfasst:
- Einarbeiten der Verbindung der Formel (I) und vorzugsweise anschließend des verstärkenden Füllstoffs in das Dienelastomer während des Massemischens durch ein- oder mehrmaliges thermomechanisches Kneten des Ganzen bis zum Erreichen einer Höchsttemperatur zwischen 130 °C und 200 °C, vorzugsweise zwischen 145 °C und 185 °C;
- Abkühlen des Ganzen auf eine Temperatur kleiner oder gleich 100 °C;
- anschließendes Einarbeiten des chemischen Vernetzungsmittels;
- Kneten des Ganzen bis zu einer Höchsttemperatur von weniger als 120 °C;
- Extrudieren oder Kalandrieren der so erhaltenen Kautschukzusammensetzung.

13. Reifen, umfassend eine Kautschukzusammensetzung gemäß einem der Ansprüche 1 bis 10.

14. Lastkraftwagenreifen, umfassend eine Lauffläche, die aus einer Kautschukzusammensetzung gemäß einem der Ansprüche 1 bis 10 besteht.

## Claims

1. Rubber composition based on at least one diene elastomer, at least one reinforcing filler, at least one chemical crosslinking agent and at least one compound, optionally already grafted to the elastomer, of following formula (I): 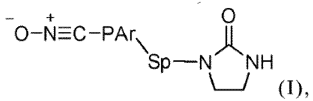 in which:
- PAr denotes a polyaromatic group comprising at least two fused aromatic hydrocarbon rings, each of the said fused aromatic rings optionally being substituted by one or more carbon-based chains, which are identical or different, which are independent of one another, which are aliphatic or aromatic, which are linear, branched or cyclic, which are optionally substituted or interrupted by one or more heteroatoms;
- Sp represents an atom or a group of atoms.

2. Composition according to Claim 1, **characterized in that** the content of compound of formula (I) varies from 0.01 molar % to 5 molar %, preferably from 0.01 molar % to 1 molar %, more preferentially from 0.1 molar % to 1 molar %.

3. Composition according to Claim 1 or 2, **characterized in that** the diene elastomer is essentially saturated, preferably chosen from ethylene/propylene/diene monomer copolymers and butyl rubbers.

4. Composition according to Claim 1 or 2, **characterized in that** the diene elastomer is essentially unsaturated, preferably chosen from natural rubber, synthetic polyisoprenes, polybutadienes, butadiene copolymers, isoprene copolymers and the mixtures of these elastomers.

5. Composition according to any one of Claims 1, 2 and 4, **characterized in that** the diene elastomer is chosen from synthetic polyisoprenes, polybutadienes, butadiene copolymers, isoprene copolymers and the mixtures of these elastomers.

6. Composition according to any one of the preceding claims, **characterized in that** the Sp group is a linear or branched C₁-C₂₄, preferentially C₁-C₁₀, more preferentially C₁-C₆, alkylene chain optionally interrupted by one or more nitrogen, sulfur or oxygen atoms.

7. Composition according to any one of the preceding claims, **characterized in that** the compound of formula (I) is of following formula (II): 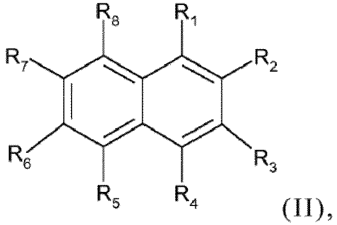 in which:
- a first group chosen from R₁ to R₈ denotes the group of following formula (III): 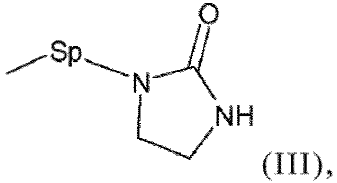 in which Sp is as defined in Claim 1 or 6;
- a second group chosen from R₁ to R₈ denotes the nitrile oxide functional group,
the six other groups, which are identical or different, represent, independently of one another, a hydrogen atom or a linear, branched or cyclic, aliphatic or aromatic, carbon-based chain optionally substituted or interrupted by one or more heteroatoms.

8. Composition according to Claim 7, **characterized in that** the compound of formula (II) is chosen from a compound of following formula (IV): 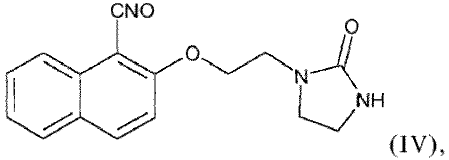 or a compound of following formula (V): 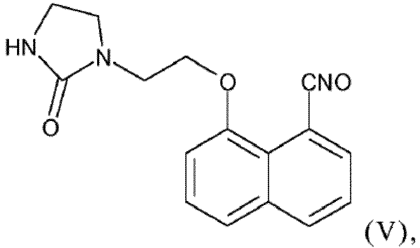 preferably the compound of formula (IV).

9. Composition according to any one of the preceding claims, **characterized in that** the filler is chosen from carbon black, silica and a blend of these two fillers.

10. Composition according to any one of the preceding claims, **characterized in that** the chemical crosslinking agent comprises from 0.5 to 12 phr of sulfur, preferably from 1 to 10 phr of sulfur, or from 0.01 to 10 phr of one or more peroxide compounds.

11. Process for the preparation of a rubber composition as defined in any one of the preceding claims, comprising the following stages:
- modifying the diene elastomer by post-polymerization solution or bulk grafting of the compound of formula (I);
- incorporating the reinforcing filler in the diene elastomer thus grafted by the compound of formula (I), everything being thermomechanically kneaded, in one or more goes, until a maximum temperature of between 130°C and 200°C is reached;
- cooling the combined mixture to a temperature of less than or equal to 100°C;
- subsequently incorporating the chemical crosslinking agent;
- kneading everything up to a maximum temperature of less than 120°C;
- extruding or calendering the rubber composition thus obtained.

12. Process for the preparation of a rubber composition as defined in any one of Claims 1 to 10, comprising the following stages:
- incorporating, during the bulk compounding, in the diene elastomer, the compound of formula (I) and, preferably subsequently, the reinforcing filler, everything being thermomechanically kneaded, in one or more goes, until a maximum temperature of between 130°C and 200°C, preferably between 145°C and 185°C, is reached;
- cooling the combined mixture to a temperature of less than or equal to 100°C;
- subsequently incorporating the chemical crosslinking agent;
- kneading everything up to a maximum temperature of less than 120°C;
- extruding or calendering the rubber composition thus obtained.

13. Tyre comprising a rubber composition as defined in any one of Claims 1 to 10.

14. Heavy-duty vehicle tyre comprising a tread constituted by a rubber composition as defined in any one of Claims 1 to 10.
